# EUROPÄISCHE PATENTANMELDUNG

(11) **EP 1 300 601 A1**
(43) Veröffentlichungstag der Anmeldung: **09.04.2003**
(21) Anmeldenummer: 02021961.4
(22) Anmeldetag: 30.09.2002
(51) Int. Cl.: F16D 23/02, F16D 11/10, F16H 3/10

(54) **Verbindungsglied (Kupplungselement) zur torsionsmomentunterbrechungsfrelen Übersetzungsumschaltung in Getrieben**

(30) Priorität: 04.10.2001 DE 10149173
(71) Anmelder: Döpper, Werenfrid, 70734 Fellbach (DE)
(72) Erfinder: Döpper, Werenfrid, 70734 Fellbach (DE)

(57) **Zusammenfassung**

Die Erfindung betrifft eine Schalteinrichtung zur torsionsmomentunterbrechungsfreien Übersetzungsumschaltung in Getrieben, insbesondere von Kraftfahrzeugen.

Die Schalteinrichtung erlaubt ein volllastschaltbares Umschalten von Getriebestufen, ohne dazu eine zweite Reibkupplung wie bei einem Doppelkupplungsgetriebe oder einem Automatgetriebe zu benötigen. Beim Umschalten der Getriebestufen wird der Zielgang eingelegt, der vorherige Gang geht selbsttätig mittels Freilauf aus dem Momentenfluß. Die Losräder eines Getriebes verfügen über je 2 in entgegengesetzter Momentenrichtung wirkende Kupplungselemente. Jedes Kupplungselement, welches die gewählte Übersetzung durch die Verbindung des jeweiligen Losrades mit der Welle herstellt, wirkt auf die Welle durch einen Freilauf nur in eine Richtung. Wirkrichtungsumkehr bewirkt über diesen Freilauf Aufhebung des Kraftschlusses zur Welle, sobald nur eines der Kupplungselemente geschaltet ist.
Bei einem Schaltvorgang wird eine gezielte Wirkrichtungsumkehr eingeleitet, automatisch zeitgleich mit einem ausgelösten Übersetzungswechsel durch ein anderes Kupplungselement, das der gewählten Zielübersetzung. Dabei dreht das Kupplungselement der Zielübersetzung in Eingriff mit dem entsprechenden Losrad unmittelbar nach dem Schaltvorgang mit höherer Drehzahl und das bisher momentenübertragende Kupplungselement, welches nur für die gewünschte Wirkrichtung in Eingriff war, wird überholt. Somit wird die Übersetzung gewechselt, ohne das Torsionsmoment zurücknehmen oder gar umkehren zu müssen.
Zur Vermeidung unerwünschter Spitzen des Torsionsmoments kann die Reibkupplung unmittelbar vor einem Schaltvorgang so gestellt oder geregelt werden, daß sie gerade genau das aktuell zu übertragende Torsionsmoment übertragen kann.

## Beschreibung

Die Erfindung betrifft eine Schalteinrichtung für Getriebe, insbesondere von Fahrzeugen, nach dem Oberbegriff des Patentanspruchs 1.

Aus dem Stand der Technik (DE 41 10 013 C1; Zahnradgetriebe, J. Loomann, Springer-Verlag) ist eine gattungsbildende Schalteinrichtung mit Schiebemuffe bekannt, die eine Innenverzahnung aufweist, mit der die Schiebemuffe mit der Losradwelle verschiebbar verbunden ist. Die Schiebemuffe ist mittels axial oder radial angeordneter Mitnehmerklauen mit den entsprechenden axial oder radial angeordneten Mitnehmerklauen eines Losrads koppelbar. Das Losrad bildet einen Teil einer Zahnradstufe und kämmt mittels einer Außenverzahnung mit einem Zahnrad, welches auf einer parallelen Welle angeordnet ist. Die Innenverzahnung der Schiebemuffe bewirkt eine axial verschiebbare Verbindung mit der Losradwelle, die über Formschluß eine in beide Drehrichtungen wirkende Torsionsmomentübertragung zwischen Losrad und Losradwelle herstellt, wenn die Mitnehmerklauen der Schiebemuffe mit denen des Losrads gekoppelt sind.
Nachteilig bei allen derartigen Schalteinrichtungen ist die zum Ausführen eines Schaltvorgangs notwendige Unterbrechung des wirkenden Torsionsmoments, also vorher die bisher in Eingriff befindlichen torsionsmomentübertragenden Kupplungselemente einer anderen Zahnradstufe auszukoppeln und somit nur mit Unterbrechung der Torsionsmomentübertragung die Übersetzung umschalten zu können. Die Unterbrechung des Torsionsmoments geschieht entweder durch Öffnen einer Reibkupplung und / oder durch Unterbrechung des Torsionsmoments durch Momenteneingriff am Antrieb, bei Verbrennungskraftmaschinen mittels Drosselorganen und / oder Zündungseingriff auf Md = 0 Nm, bei elektrischen Maschinen in der Regel durch Rücknahme des Erregerstroms auf I_err = 0 A, damit auf Md = 0 Nm, bei hydraulischen Maschinen (Hydrostaten) durch Stellen bzw. Regeln des Antriebsmoments auf Md = 0 Nm. Bei Doppelkupplungs- oder Automatgetrieben ist eine ähnliche Umschaltung der Übersetzung durch Öffnen einer Reibkupplung und dem gleichzeitigen Schließen der übernehmende Reibkupplung möglich. Nachteilig dabei ist allerdings, daß während der Überschneidung der Reibkupplungen das am Getriebeausgang anliegende Torsionsmoment stark über das gewünschte Maß hinaus durch die Verlustleistungen der Reibkupplungen prinzipbedingt reduziert werden muß.

Der vorliegenden Erfindung liegt daher die Aufgabe zugrunde, eine Schalteinrichtung bereitzustellen, die ein Einlegen einer anderen Getriebestufe erlaubt, ohne vorher die bisher in Eingriff befindliche torsionsmomentübertragende Getriebestufe auszukoppeln und somit ohne Unterbrechung oder Reduzierung der Torsionsmomentübertragung die Übersetzung umzuschalten.

Diese Aufgabe wird gemäß der Erfindung durch die Merkmale des Patentanspruchs 1 gelöst. Weitere Ausgestaltungen der Erfindung ergeben sich aus den Unteransprüchen.

Die neue Schalteinrichtung nach der vorliegenden Erfindung verfügt für jedes Getriebelosrad über je zwei Kupplungselemente. Diese wirken über je einen der jeweiligen Drehrichtung zugeordneten Freilauf auf die Losradwelle. Gegenüber herkömmlichen, in beiden Drehrichtungen wirkenden einzelnen Kupplungselementen ergibt sich aus dieser erfindungsgemäßen Ausbildung der Vorteil eines sowohl gezielten Torsionsmomentübertragens in nur eine Wirkrichtung, mit der Möglichkeit, in die entgegengesetzte Wirkrichtung kein Torsionsmoment übertragen zu können, als auch bei Einlegen beider Kupplungselemente die Möglichkeit Torsionsmoment in beide Wirkrichtungen übertragen zu können. Bei nur einem eingelegten Kupplungselement geht bei Umschalten des wirkenden Torsionsmoments auf eine andere Getriebestufe unmittelbar und selbsttätig über den Freilauf die bisher wirkende Getriebestufe aus dem Momentenfluß. Alternativ dazu kann der eine Freilauf anstelle des Lagers des jeweiligen Losrads und der komplementäre dazu am Kupplungselement angeordnet sein. Das mit diesem Zahnrad kämmende, eine Getriebestufe ergebende zweite Zahnrad, kann äquivalent aufgebaut sein, nur in die entgegengesetzte Drehrichtung wirkend und ebenfalls mit dem dazu komplementären Freilauf am Kupplungselement.

Desweiteren ergibt sich der Vorteil einer einfachen und kostengünstigen Fertigung der Losradwelle und der Kupplungselemente nach erfindungsgemäßer Ausgestaltung durch den Verzicht auf die ansonsten benötigte Anbringung von Mitnehmerverzahnungen in Form von Keilnuten oder Polygonen oder anderen Mitnehmerverzahnungen auf der Losradwelle und / oder den Kupplungselementen, sowie eventuell benötigter Zwischenkörper zwischen Kupplungselementen und Losradwelle.

In einer weiteren Ausgestaltung der Erfindung wird vorgeschlagen, die Kupplungselemente so zu gestalten, daß durch eine sinnvolle Anordnung jedes zwischen zwei Losrädern liegende Kupplungselement für zwei Getriebestufen genutzt werden kann. Mittels einer derartigen Anordnung werden sowohl Bauteile als auch Fertigungskosten als auch Bauraum eingespart.

Weitere Vorteile ergeben sich aus den Unteransprüchen und der Beschreibung.

Bevorzugte Ausführungsbeispiele der erfindungsgemäßen neuen Schalteinrichtung werden nachfolgend anhand der Zeichnung näher erläutert. In der Zeichnung zeigt:
- Fig. 1: einen schematisch dargestellten Längsschnitt durch eine erfindungsgemäße Schalteinrichtung mit einem Losrad, zwei Schiebemuffen, zwei Freiläufen und der Losradwelle, sowie
- Fig. 2: eine mögliche erfindungsgemäße Klauenform im Schnitt in Umfangsrichtung, sowie
- Fig. 3: Getriebestruktur-Anordnung für Hochschalten mit erfindungsgemäßer Schalteinrichtung, sowie
- Fig. 4: Getriebestruktur-Anordnung für Rückschalten mit erfindungsgemäßer Schalteinrichtung, sowie
- Fig. 5: Getriebestruktur-Anordnung für Hochschalten mit erfindungsgemäßer Schalteinrichtung unter Berücksichtigung der erfindungsgemäßen sinnvollen Anordnung von Kupplungselementen zur Doppelnutzung

Die erfindungsgemäße Schalteinrichtung dient der manuellen, automatischen oder automatisierten Durchführung von Schaltvorgängen in Getrieben, insbesondere in Getrieben von Kraftfahrzeugen, ohne dazu jeweils eine Unterbrechung der Torsionsmomentübertragung vornehmen zu müssen. Die erfindungsgemäße Schalteinrichtung verfügt über drehrichtungsgebundene Mitnahmeelemente für die Losräder eines Getriebes. Diese Kupplungselemente bestehen aus Schiebemuffen, die wie bekannt, eine formschlüssige Verbindung zwischen den Losrädern und der jeweiligen Losradwelle der jeweiligen Getriebestufe im Getriebe herstellen, sowie Freiläufen, die durch ihre prinzipbedingte Eigenschaft der Torsionsmomentübertragung nur in eine Richtung erlauben, in die andere Drehrichtung beansprucht jedoch öffnen, und somit die Torsionsmomentübertragung selbsttätig während eines Schaltvorgangs in eine andere Getriebestufe freigeben. Bei einem Schaltvorgang wird die nächsthöhere oder, je nach Auslegung der erfindungsgemäßen Schalteinrichtung, die nächsttiefere Getriebestufe geschaltet und gleichzeitig wird durch den vorher freigegebenen Freilauf der bisher aktiven Getriebestufe das selbsttätige Öffnen des entsprechenden Freilaufs ermöglicht. Die durch einen derartigen Schaltvorgang in der Regel hervorgerufene Torsionsmomentspitze kann durch eine zielgerichtete Ansteuerung einer oder mehrerer vor oder nach dem Getriebe befindlichen Reibkupplungen vermieden werden. Dazu ist die entsprechende Reibkupplung in ihrer axialen Anpressung so zu stellen, daß sie nur gerade das Torsionsmoment übertragen kann, welches unmittelbar vor dem Schaltvorgang vom Antrieb geliefert wird.

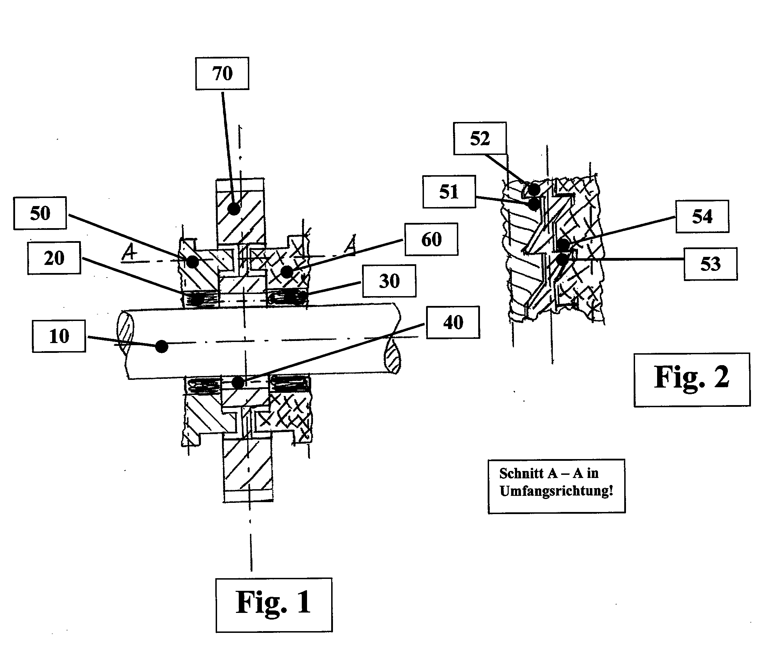

Gemäß dem in Fig. 1 dargestellten Ausführungsbeispiel verfügt die Schalteinrichtung für jede Getriebestufe über ein Losrad 70, welches mittels eines Losradlagers 40 auf der Losradwelle 10 frei läuft. Dieses kann über drehrichtungszugeordnete axial verschiebbare Schiebemuffen (Klauenelemente) 50 bzw. 60 mittels daran angeordneter ebenfalls drehrichtungszugeordneter Freiläufe 20 bzw. 30 mit der Losradwelle 10 gekoppelt werden. Somit wird beim Einlegen einer Schiebemuffe eine Übertragung von Torsionsmoment in jeweils eine Drehrichtung zwischen dem Losrad 70 und der Losradwelle 10 ermöglicht. Gleichzeitiges Einlegen beider Schiebemuffen 50 und 60 bewirkt durch die gegensinnige Anordnung der Freiläufe 20 und 30 die Möglichkeit der Übertragung von Torsionsmoment in beide Wirkrichtungen.
Ein axiales Verschieben einer der beiden Schiebemuffen 50 oder 60 aus dem Eingriff mit dem Losrad 70 führt zu einem nur noch in eine Drehrichtung möglichen Übertragen des Torsionsmoments. Somit kann, wenn die nächste Getriebestufe eingelegt wird, der Freilauf 20 bzw. 30 sofort den Momentenfluß der vorherig eingelegten Getriebestufe unterbrechen und freigeben. Hinreichende Bedingung für ein erfolgreiches selbsttätiges Freigeben der vorher aktiven Getriebestufe ist, daß das Losrad 70 der jeweiligen Zielgetriebestufe eine höhere Drehzahl aufweist als die Losradwelle 10.

Gemäß dem in Fig. 2 dargestellten Ausführungsbeispiel kann die Schalteinrichtung über Mitnehmerklauen 51, 52, 53, 54 verfügen, die optimiert für die jeweilige Wirkrichtung des Torsionsmoments rampenförmig ausgeführt sind. Damit wird das Einspuren in die entsprechende Lücke des Gegenkörpers bei einem Schaltvorgang erleichtert. Wird zum Beispiel die Schiebemuffe 50 mit den Mitnehmerklauen 51 alleine axial in das laufende Losrad 70 mit den korrespondierenden Mitnehmerklauen 52 eingespurt, so wird damit selbst bei hohen Differenzdrehzahlen zwischen Schiebemuffe 50 und Losrad 70 bei entsprechend hoher Schaltgeschwindigkeit sicheres Einlegen gewährleistet. Die Formgebung der Klauen beider Körper sowie der korrespondierenden Lücken ist dabei sinnvoll auf den Anwendungsfall, also insbesondere auf die maximal auftretende Differenzdrehzahl hin, vorzunehmen.

Grundsätzlich sind die Klauen und korrespondierenden Lücken unabhängig von der Form der Klauen demnach so zu gestalten, daß mit der vorgesehenen Schaltgeschwindigkeit in jedem Fall ein Ineinandergreifen der Mitnehmerklauen 51 und 52 bzw. 53 und 54 gewährleistet werden kann.

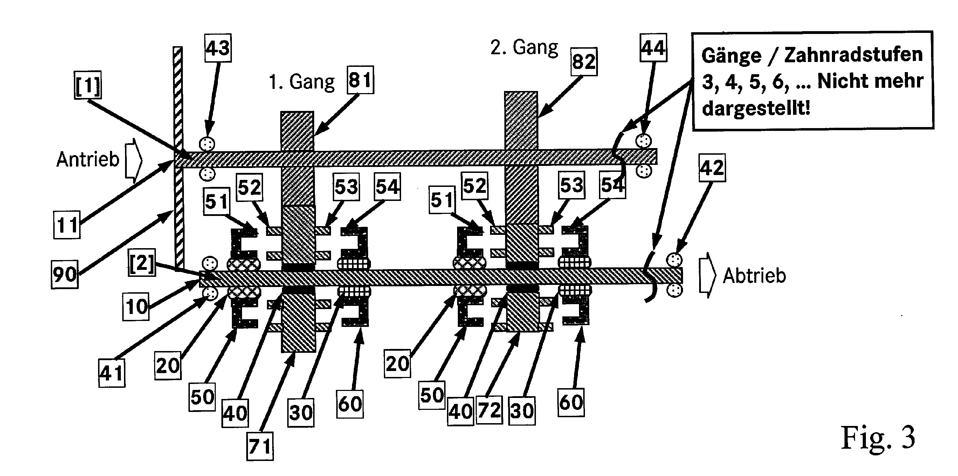

Gemäß dem in Fig. 3 dargestellten Ausführungsbeispiel ist eine derartige Schalteinrichtung geeignet, durch Anordnung der Losräder 71, 72 in der dargestellten Weise, torsionsmomentunterbrechungsfreies Hochschalten zu gewährleisten. Die zwei beispielhaft dargestellten Getriebestufen, 1. Gang und 2. Gang, bestehen je aus Festrad 81 bzw. 82 und dem damit kämmenden Losrad 71 bzw. 72. Die Losräder sind mittels der Losradlager 40 auf der Losradwelle 10 gelagert und können über die zugehörigen Kupplungselemente kraftschlüssig mit der Losradwelle 10 verbunden werden. Dabei wird, für den 1. Gang, bei Einlegen der Schaltmuffe 50 über die Mitnehmerklauen 51 die Verbindung zum Losrad 71 mit den Mitnehmerklauen 52 hergestellt. Der in diese Richtung sperrende Freilauf 20 stellt dann in Momentrichtung 1, Antriebsmomentrichtung, die kraftschlüssige Verbindung zwischen Losrad 71 und Losradwelle 10 für Momentrichtung 1 her. In Momentrichtung 2, Gegenantriebsmomentrichtung, erlaubt der Freilauf 20 keine Übertragung des Torsionsmoments. Zum Übertragen des Torsionsmoments in beide Richtungen ist ein zusätzliches Einlegen der Schaltmuffe 60 notwendig. Dabei wird bei Einlegen der Schaltmuffe 60 über die Mitnehmerklauen 54 die Verbindung zum Losrad 71 mit den Mitnehmerklauen 53 hergestellt. Der Freilauf 30 stellt dann in Momentrichtung 2, Gegenantriebsmomentrichtung, die kraftschlüssige Verbindung zur Losradwelle 10 her.
Für den torsionsmomentunterbrechungsfreien Wechsel von Getriebestufe 1 zu Getriebestufe 2 ist unmittelbar vor dem Schaltvorgang das Kupplungselement für Gegenantriebsmomentrichtung, bestehend aus Schaltmuffe 60 und Freilauf 30 am Losrad 71 auszulegen.
Anschließend wird, für den 2. Gang, bei Einlegen der Schaltmuffe 50 über die Mitnehmerklauen 51 die Verbindung zum Losrad 72 mit den Mitnehmerklauen 52 hergestellt. Der in diese Richtung sperrende Freilauf 20 stellt dann in Momentrichtung 1, Antriebsmomentrichtung, die kraftschlüssige Verbindung zwischen Losrad 72 und Losradwelle 10 für Momentrichtung 1 her.
Der offene Freilauf 20 am Losrad 71 öffnet und kann überholt werden. Dazu ist die Anordnung der Getriebestufen so zu wählen, daß die Losräder der jeweils höheren Getriebestufen mit höherer Drehzahl auf der Losradwelle 10 umlaufen, als die Losradwelle selbst. Im dargestellten Beispiel verfügt das Losrad 72 über eine höhere Drehzahl als das Losrad 71, und somit bei eingelegter 1. Getriebestufe (1. Gang) über eine höhere Drehzahl als die Losradwelle. Ein torsionsmomentunterbrechungsfreies Umschalten auf die höhere 2. Getriebestufe (2. Gang) ist somit möglich. Dies ist z.B. für Fahrzeuge von Interesse, bei denen ein starke ununterbrochene Beschleunigung erwünscht ist, wie z.B. Sportwagen, Krafträder oder Motorsportfahrzeuge.

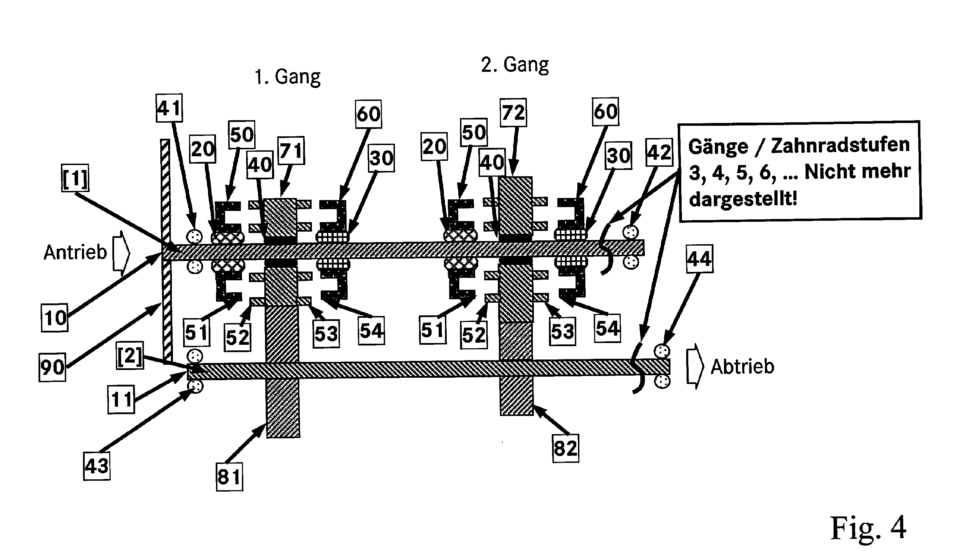

Gemäß dem in Fig. 4 dargestellten Ausführungsbeispiel ist eine derartige Schalteinrichtung geeignet, durch Anordnung der Losräder 71, 72 in der dargestellten Weise, torsionsmomentunterbrechungsfreies Rückschalten (Zugrückschalten) zu gewährleisten. Die zwei beispielhaft dargestellten Getriebestufen, 1. Gang und 2. Gang, bestehen je aus Festrad 81 bzw. 82 und dem damit kämmenden Losrad 71 bzw. 72. Die Losräder sind mittels der Losradlager 40 auf der Losradwelle 10 gelagert und können über die zugehörigen Kupplungselemente kraftschlüssig mit der Losradwelle 10 verbunden werden. Dabei wird, für den 2. Gang, bei Einlegen der Schaltmuffe 50 über die Mitnehmerklauen 51 die Verbindung zum Losrad 72 mit den Mitnehmerklauen 52 hergestellt. Der in diese Richtung sperrende Freilauf 20 stellt dann in Momentrichtung 1, Antriebsmomentrichtung, die kraftschlüssige Verbindung zwischen Losrad 72 und Losradwelle 10 für Momentrichtung 1 her. In Momentrichtung 2, Gegenantriebsmomentrichtung, erlaubt der Freilauf 20 keine Übertragung des Torsionsmoments. Zum Übertragen des Torsionsmoments in beide Richtungen ist ein zusätzliches Einlegen der Schaltmuffe 60 notwendig. Dabei wird bei Einlegen der Schaltmuffe 60 über die Mitnehmerklauen 54 die Verbindung zum Losrad 72 mit den Mitnehmerklauen 53 hergestellt. Der Freilauf 30 stellt dann in Momentrichtung 2, Gegenantriebsmomentrichtung, die kraftschlüssige Verbindung zur Losradwelle 10 her. Für den torsionsmomentunterbrechungsfreien Wechsel von Getriebestufe 2 zu Getriebestufe 1 ist unmittelbar vor dem Schaltvorgang das Kupplungselement für Gegenantriebsmomentrichtung, bestehend aus Schaltmuffe 60 und Freilauf 30 am Losrad 72 auszulegen.
Anschließend wird, für den 1. Gang, bei Einlegen der Schaltmuffe 50 über die Mitnehmerklauen 51 die Verbindung zum Losrad 71 mit den Mitnehmerklauen 52 hergestellt. Der in diese Richtung sperrende Freilauf 20 stellt dann in Momentrichtung 1, Antriebsmomentrichtung, die kraftschlüssige Verbindung zwischen Losrad 71 und Losradwelle 10 für Momentrichtung 1 her.
Der offene Freilauf 20 am Losrad 72 öffnet und kann überholt werden. Dazu ist die Anordnung der Getriebestufen so zu wählen, daß die Losräder der jeweils niedrigeren Getriebestufen mit höherer Drehzahl auf der Losradwelle 10 umlaufen, als die Losradwelle selbst. Im dargestellten Beispiel verfügt das Losrad 71 über eine höhere Drehzahl als das Losrad 72, und somit bei eingelegter 2. Getriebestufe (2. Gang) über eine höhere Drehzahl als die Losradwelle. Ein torsionsmomentunterbrechungsfreies Umschalten auf die niedrigere 1. Getriebestufe (1. Gang) ist somit möglich. Dies ist z.B. vor allem bei Nutzfahrzeugen mit großer Beladung in Steigungen von Interesse.

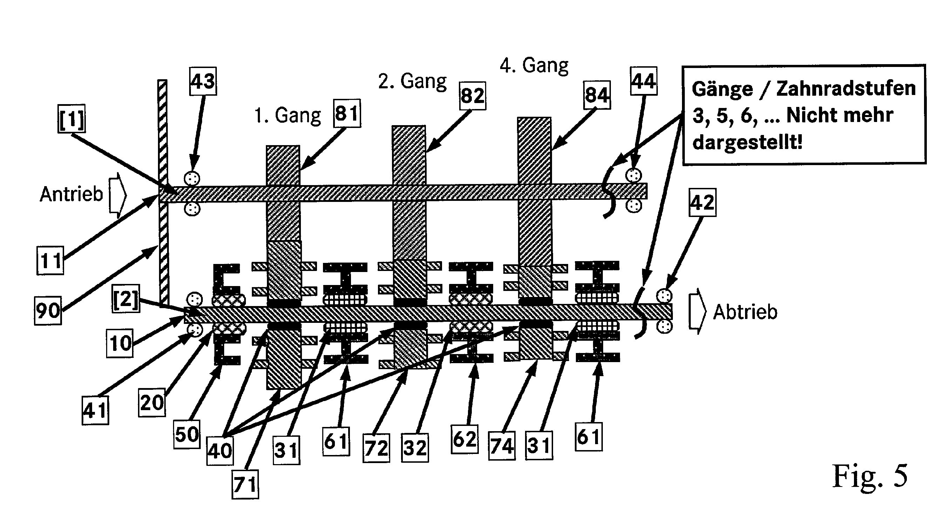

Gemäß dem in Fig. 5 dargestellten Ausführungsbeispiel ist eine derartige Schalteinrichtung geeignet, durch Anordnung der Losräder 71, 72, 74 in der dargestellten Weise, torsionsmomentunterbrechungsfreies Hochschalten zu gewährleisten. Um Bauraum und Kosten zu sparen befinden sich bei diesem Ausführungsbeispiel gemeinsame Schiebemuffen 61 und 62 auf ebenso gemeinsam genutzten Freiläufen 31 und 32.
Der Schaltvorgang geschieht analog zum in Fig. 3 dargestellten Ausführungsbeispiel.

Die drei beispielhaft dargestellten Getriebestufen, 1. Gang, 2. Gang und 4. Gang, bestehen je aus Festrad 81 bzw. 82 bzw. 84 und dem damit kämmenden Losrad 71 bzw. 72 bzw. 74. Die Losräder sind mittels der Losradlager 40 auf der Losradwelle 10 gelagert und können über die zugehörigen Kupplungselemente kraftschlüssig mit der Losradwelle 10 verbunden werden. Dabei wird, für den 1. Gang, bei Einlegen der Schaltmuffe 50 die Verbindung zum Losrad 71 hergestellt. Der in diese Richtung sperrende Freilauf 20 stellt dann in Momentrichtung 1, Antriebsmomentrichtung, die kraftschlüssige Verbindung zwischen Losrad 71 und Losradwelle 10 für Momentrichtung 1 her. In Momentrichtung 2, Gegenantriebsmomentrichtung, erlaubt der Freilauf 20 keine Übertragung des Torsionsmoments. Zum Übertragen des Torsionsmoments in beide Richtungen ist ein zusätzliches Einlegen der Schaltmuffe 60 notwendig. Dabei wird bei Einlegen der Schaltmuffe 60 die Verbindung zum Losrad 71 hergestellt. Der Freilauf 31 stellt dann in Momentrichtung 2, Gegenantriebsmomentrichtung, die kraftschlüssige Verbindung zur Losradwelle 10 her.
Für den torsionsmomentunterbrechungsfreien Wechsel von Getriebestufe 1 zu Getriebestufe 2 ist unmittelbar vor dem Schaltvorgang das Kupplungselement für Gegenantriebsmomentrichtung, bestehend aus Schaltmuffe 61 und Freilauf 31 am Losrad 71 auszulegen.
Anschließend wird, für den 2. Gang, bei Einlegen der Schaltmuffe 62 die Verbindung zum Losrad 72 mit den Mitnehmerklauen 52 hergestellt. Der in diese Richtung sperrende Freilauf 32 stellt dann in Momentrichtung 1, Antriebsmomentrichtung, die kraftschlüssige Verbindung zwischen Losrad 72 und Losradwelle 10 für Momentrichtung 1 her.
Der offene Freilauf 20 am Losrad 71 öffnet und kann überholt werden.
Dazu ist die Anordnung der Getriebestufen so zu wählen, daß die Losräder der jeweils höheren Getriebestufen mit höherer Drehzahl auf der Losradwelle 10 umlaufen, als die Losradwelle selbst. Im dargestellten Beispiel verfügt das Losrad 74 über eine höhere Drehzahl als das Losrad 72, dieses wiederum über eine höhere Drehzahl als das Losrad 71, und somit beide Losräder 72 und 74 bei eingelegter 1. Getriebestufe (1. Gang) über eine höhere Drehzahl als die Losradwelle, Losrad 74 bei eingelegter 2. Getriebestufe (2. Gang) über eine höhere Drehzahl als die Losradwelle. Ein torsionsmomentunterbrechungsfreies Umschalten auf die jeweils höhere Getriebestufe ist somit möglich. Im dargestellten Ausführungsbeispiel ist die sinnvolle Anordnung der Schiebemuffen 61 und 62 mit den dazugehörigen Freiläufen 31 und 32 gezeigt, die jeweils für 2 Getriebestufen gemeinsam genutzt werden. Dabei übernimmt das Schiebemuffe 61 zwischen den Getriebestufen 1 und 2 die Aufgabe, für beide Getriebestufen in Gegenantriebsmomentrichtung Moment zu übertragen.
Die Schiebemuffe 62 zwischen den Getriebestufen 2 und 4 übernimmt dabei die Aufgabe, für beide Getriebestufen in Antriebsmomentrichtung Moment zu übertragen. Dabei übernimmt das Schiebemuffe 61 zwischen den Getriebestufen 4 und X (z.B. 3 oder 5) die Aufgabe, für beide Getriebestufen in Gegenantriebsmomentrichtung Moment zu übertragen.
Die Schalteinrichtung eröffnet der Gestaltung der Getriebestruktur hinsichtlich der Anordnung der von 2 Getriebestufen gemeinsam zu nutzenden Kupplungselementen große Freiheiten, diese können vor allem immer zwischen nicht direkt benachbarten Getriebestufen (z.B. 2 und 4 oder 3 und 5) angeordnet werden.

### Bezugszeichen

- [1]: Primärwelle
- [2]: Sekundärwelle
- 10: Losradwelle
- 11: Festradwelle
- 20: Freilauf - sperrend in Momentrichtung 1, öffnend in Momentrichtung 2
- 30: Freilauf - sperrend in Momentrichtung 2, öffnend in Momentrichtung 1
- 31: Freilauf - sperrend in Momentrichtung 2, öffnend in Momentrichtung 1; Anordnung zur gemeinsamen Nutzung durch zwei Zahnradstufen
- 32: Freilauf - sperrend in Momentrichtung 1, öffnend in Momentrichtung 2; Anordnung zur gemeinsamen Nutzung durch zwei Zahnradstufen
- 40: Lager des Losrads (der Losräder) auf Losradwelle
- 41: Vorderes Lager der Losradwelle im Getriebegehäuse oder in einem Lagergehäuse
- 42: Hinteres Lager der Losradwelle im Getriebegehäuse oder in einem Lagergehäuse
- 43: Vorderes Lager der Festradwelle im Getriebegehäuse oder in einem Lagergehäuse
- 44: Hinteres Lager der Festradwelle im Getriebegehäuse oder in einem Lagergehäuse
- 50: Schiebemuffe für Momentrichtung 1
- 51: Mitnehmerklaue auf Schiebemuffe für Momentrichtung 1
- 52: Mitnehmerklaue auf Losrad für Momentrichtung 1
- 53: Mitnehmerklaue auf Losrad für Momentrichtung 2
- 54: Mitnehmerklaue auf Schiebemuffe für Momentrichtung 2
- 60: Schiebemuffe für Momentrichtung 2
- 61: Schiebemuffe für Momentrichtung 2; Anordnung zur gemeinsamen Nutzung durch zwei Zahnradstufen
- 62: Schiebemuffe für Momentrichtung 1; Anordnung zur gemeinsamen Nutzung durch zwei Zahnradstufen
- 70: Losrad einer Zahnradstufe (Gang) des Getriebes
- 71: Losrad der Zahnradstufe 1 (1. Gang) des Getriebes
- 72: Losrad der Zahnradstufe 2 (2. Gang) des Getriebes
- 74: Losrad der Zahnradstufe 4 (4. Gang) des Getriebes
- 80: Festrad einer Zahnradstufe (Gang) des Getriebes
- 81: Festrad der Zahnradstufe 1 (1. Gang) des Getriebes
- 82: Festrad der Zahnradstufe 2 (2. Gang) des Getriebes
- 84: Festrad der Zahnradstufe 4 (4. Gang) des Getriebes
- 90: Reibkupplung (Getriebeseite)

## Patentansprüche

1. Schalteinrichtung für Getriebe, insbesondere von Kraftfahrzeugen,
**dadurch gekennzeichnet, daß**
jedes Getriebelosrad (70) über mindestens eine und höchstens zwei wirkrichtungszugeordnete Schiebemuffen (50, 60) verfügt, die jeweils über einen der jeweiligen Drehrichtung zugeordneten Freilauf (20, 30) auf die Losradwelle (10) wirken.

2. Schalteinrichtung nach Anspruch 1, bei der ein Freilauf (20 oder 30) anstelle des Losradlagers (40) angeordnet wird und der jeweils gegensinnig wirkende Freilauf (30 oder 20) an der Schiebemuffe (60 oder 50).

3. Schalteinrichtung nach Anspruch 1 oder 2, bei der die Schiebemuffen (61, 62) und Freiläufe (31, 32) jeweils zweier Zahnradstufen (Gänge) so zusammengefaßt sind, daß für benachbarte Gänge, nach der Formel: i_n und i_n+1, z.B. 1. und 2. Gang (71 und 81, 72 und 82), das in Gegenantriebsmomentrichtung wirkende Kupplungselement einen gemeinsamen Freilauf (31) und eine für beide Gänge zu nutzende Schaltmuffe (61) trägt, oder für zwei nicht benachbarte Gänge, nach der Formel: i_n und i_n+2, z.B. 2. und 4. Gang (72 und 82, 74 und 84), das in Antriebsmomentrichtung wirkende Kupplungselement einen gemeinsamen Freilauf (32) und eine für beide Gänge zu nutzende Schaltmuffe (62) trägt.

4. Schalteinrichtung nach Anspruch 1, 2 oder 3, bei der die Losräder (70, 71, 72, 74) und die zugehörigen Schiebemuffen (50, 61, 62) sowie die entsprechenden Freiläufe (20, 31, 32) auf der Sekundärwelle ([2])des Getriebes angeordnet sind.

5. Schalteinrichtung nach Anspruch 1, 2 oder 3, bei der die Losräder (70, 71, 72, 74) und die zugehörigen Schiebemuffen (50, 61, 62) sowie die entsprechenden Freiläufe (20, 31, 32) auf der Primärwelle ([1]) des Getriebes angeordnet sind.

6. Schalteinrichtung nach Anspruch 1, 2 oder 3, bei der sowohl Losräder (70, 71, 72, 74) und die zugehörigen Schiebemuffen (50, 61, 62) sowie die entsprechenden Freiläufe (20, 31, 32) auf der Primärwelle ([1]) als auch der Sekundärwelle ([2]) des Getriebes angeordnet sind.

7. Schalteinrichtung nach Anspruch 1, 2, 3, 4, 5 oder 6, bei der die Mitnehmerklauen (51, 52, 53, 54) von Schiebemuffen (50, 60) und Losrädern (70) radial oder axial angeordnet sind.

8. Schalteinrichtung nach Anspruch 1, 2, 3, 4, 5, 6 oder 7, bei der die Mitnehmerklauen (51, 52, 53, 54) von Schiebemuffen (50, 60) und Losrädern (70) rampenförmig ausgebildet sind, und somit für die jeweilige Wirkrichtung optimiert.

9. Schalteinrichtung nach Anspruch 1, 2, 3, 4, 5, 6, 7 oder 8, bei der die Mitnehmerklauen (51, 52, 53, 54) von Schiebemuffen (50, 60) und Losrädern (70) an der mitnehmend wirkenden Seite mit oder ohne Hinterschnitt ausgeführt werden.

10. Schalteinrichtung nach Anspruch 1, 2, 3, 4, 5, 6, 7, 8 oder 9, bei der die Betätigung der Schiebemuffen (60, 61, 62) durch verschiebbare Schaltgabeln und / oder Schaltschwingen erfolgt, die wiederum durch eine oder mehrere Schaltwalzen und / oder Schaltstangen bewegt werden, wobei diese sowohl mechanisch und / oder hydraulisch durch entsprechendes Hebelwerk und Muskelkraft des Betätigenden als auch elektrisch und / oder hydraulisch durch entsprechend geeignete Stellglieder, wie z.B. Elektromotoren oder elektrisch gesteuerte hydraulische Antriebe und beliebiger Kombinationen daraus betätigt werden.

11. Schalteinrichtung nach Anspruch 1, 2, 3, 4, 5, 6, 7, 8, 9 oder 10, bei der sich zwischen dem Antrieb und/oder der Reibkupplung (90) und der Primärwelle ([1]) eine oder mehrere Zahnradkonstantstufen befinden.

12. Schalteinrichtung nach Anspruch 1, 2, 3, 4, 5, 6, 7, 8, 9 oder 10, bei der sich zwischen der Sekundärwelle ([2]) und der Abtriebswelle (10) eine oder mehrere Zahnradkonstantstufen befinden.

13. Schalteinrichtung nach Anspruch 1, 2, 3, 4, 5, 6, 7, 8, 9, 10, 11 oder 12, bei der bei einem damit ausgeführten Schaltvorgang zur Dämpfung der auftretenden Torsionsmomentspitzen die Anpressung einer oder mehrerer Reibkupplungen (90) vor der Ausführung eines Schaltvorgangs so gestellt oder geregelt wird, daß gerade das gewünschte Torsionsmoment übertragen werden kann.

14. Schalteinrichtung nach Anspruch 1 und aller Unteransprüche, in allen Kombinationen, die sich aus der Zeichnung ergeben.
